# EUROPÄISCHE PATENTSCHRIFT

(11) **EP 2 147 907 B1**
(45) Veröffentlichungstag und Bekanntmachung des Hinweises auf die Patenterteilung: **03.12.2014**
(21) Anmeldenummer: 09165527.4
(22) Anmeldetag: 15.07.2009
(51) Int. Cl.: C04B 41/49, C04B 111/80

(54) **Zusammensetzung und deren Verwendung**
Compound and use of same
Composition et son utilisation

(30) Priorität: 16.07.2008 DE 102008033315
(43) Veröffentlichungstag der Anmeldung: 27.01.2010
(73) Patentinhaber: Alpin-Chemie GmbH, 87527 Sonthofen (DE)
(72) Erfinder: Winkler, Ralf-Peter, 87527, Sonthofen (DE)
(74) Vertreter: Hutzelmann, Gerhard

(56) Entgegenhaltungen:
- EP-A2- 0 908 498
- WO-A1-97/23432
- DE-A1- 4 242 445
- DE-A1- 19 904 496
- US-A- 4 525 213

## Beschreibung

Die Erfindung bezieht sich auf eine dünnflüssige Zusammensetzung im Baukastensystem zum Steuern des Eindringverhaltens von polaren und unpolaren Flüssigkeiten in mineralischen Baustoffe, wie Beton, Natur- und Kunststeine, Fliesen, Putze, bestehend aus einer Fluorkomponenten, Silan/Siloxan und Lösungsmittel und eventuell Füllstoffen.

Es sind verschiedene derartige Zusammensetzungen bekannt.

Aus der DE 42 42 445 A1 ist beispielsweise eine wässrige Zusammensetzung des genannten Typs bekannt, die für Wasser aufnehmende Baustoffe geeignet ist.

Aus der EP 0 908 498 A2 ist eine weitere Zusammensetzung bekannt, die einerseits als Additiv aber andererseits auch als wässrige Beschichtung vorgesehen ist.

Aus der WO 97/23432 A1 ist eine Emulsion bekannt, die als Beschichtungslösung kein bzw. ein stark begrenztes Eindringverhalten aufweist.

Aus der US 4 525 213 ist eine wasserabweisende Beschichtung für SiO₂ haltige Materialien bekannt, die aufgrund der enthaltenen aromatischen Lösungsmittel bedenklich ist.

Alle diese Zusammensetzungen weisen jedoch den Nachteil auf, nur jeweils für eine bestimmte Verwendung geeignet zu sein. Manchmal werden auch die optischen Eigenschaften des zu behandelnden Untergrundes negativ beeinflusst, obwohl dies nicht gewünscht ist. Zudem kann bei den bekannten Zusammensetzungen nicht sichergestellt werden, daß diese gerade bei stark saugfähigen Untergründen in der gewünschten Weise wirken.

Zudem wird oftmals eine Hervorhebung der natürlichen Struktur des Untergrundes gewünscht, bei einem gleichzeitig definiert und reproduzierbar gesteuertem Eindringverhalten von polaren und unpolaren Flüssigkeiten.

Daher liegt der Erfindung die Aufgabe zugrunde, eine Zusammensetzung zu schaffen, die auf unterschiedliche Anwendungen abgestimmt werden kann und so die gewünschten Eigenschaften im Hinblick auf Steuerung des Eindringverhaltens und Strukturhervorhebung eingestellt werden können. Zudem soll eine verschleißfreie Imprägnierung geschaffen werden, die auch auf vielen Natursteinen einsetzbar ist, die oftmals nicht oder nur in geringem Maße Wasser aufnehmen können.

Diese Aufgabe wird erfindungsgemäß dadurch gelöst, daß 0,5 bis 5% Fluorkomponenten und 10 bis 30% Silan/Siloxan und als Lösungsmittel ein aliphatisches Lösungsmittel und/oder ein Kohlenwasserstoff vorgesehen ist, oder 1 bis 5% Fluorkomponenten und 1 bis 10% Silan/Siloxan und als Lösungsmittel ein aliphatisches Lösungsmittel und/oder ein Kohlenwasserstoff vorgesehen ist, das die Zusammensetzung auf 100% ergänzt.

Durch das Zusammenwirken der Silane, Siloxane und der Fluorkomponente wird eine hervorragende Steuerung bzw. Verringerung des Eindringens von polaren und unpolaren Flüssigkeiten erzielt. Durch den Einsatz der genannten Lösungsmittel lassen sich sowohl die Fluorkomponente als auch die Silan/Siloxan-Komponente sehr gut lösen. Zudem wird wiederum eine hervorragende Benetzbarkeit der zu behandelnden Oberflächen gewährleistet. Durch die beiden im Hauptanspruch genannten Alternativen lassen sich auf einfache Art und Weise verschiedene Wirkungen der Zusammensetzung erzeugen. Insbesondere kann je nach Alternative die Lichtbrechung an der behandelten Oberfläche verändert und so eine Hervorhebung der Struktur der Oberfläche erzeugt. Trotzdem bleiben die abstoßenden Eigenschaften gegenüber polaren und unpolaren Flüssigkeiten erhalten. Auch eine ausschließlich hervorragende Abstoßung gegenüber polaren und unpolaren Flüssigkeiten kann erzeugt werden, ohne eine Strukturhervorhebung zu erzeugen.

Dabei ist es sehr vorteilhaft, wenn die Silane, Siloxane und/oder Fluorkomponenten in Butylacetat und/oder Naphta gelöst sind.

Dadurch wird eine sehr gute Aufbringbarkeit und Benetzung der zu behandelnden Untergründe sichergestellt.

Eine weitere sehr vorteilhafte Ausgestaltung der Erfindung liegt auch dann vor, wenn Füllstoffe vorgesehen sind.

Füllstoffe sorgen für eine Auskleidung und/oder ganz- oder teilweise Füllung von Poren. Dadurch kann die Oberfläche verändert, zum Beispiel geglättet werden. Mit den Füllstoffen können so alleine oder in Kombination mit anderen Inhaltsstoffen der Zusammensetzung Veränderungen der Oberflächenspannung und auch der Lichtbrechung an der behandelten Oberfläche erzeugt werden.

Sehr vorteilhaft ist es dabei, wenn als Füllstoffe feine Partikel vorgesehen sind, die auf mineralischer Basis beruhen können.

Ebenfalls sehr vorteilhaft ist es gemäß einer weiteren Ausgestaltung der Erfindung auch, wenn als Füllstoffe SiO₂, ZrO₂, TiO₂, Al₂O₃, Polymerpartikel, Glaspartikel, Kieselgele, Kieselsäuren, feste Fluorpolymere, die fein verteilt sein können und/oder, Silikonharze vorgesehen sind, die modifiziert oder beschichtet sein können.

Bei Einsatz derartiger Partikel wurden hervorragende Ergebnisse beobachtet. Die optische Struktur der behandelten Oberfläche konnte je nach eingesetzten Partikeln sehr gut hervorgehoben werden. Der Einsatz von beschichteten oder modifizierten Partikeln bietet sich vor allem bei hygroskopischen Materialien wie zum Beispiel Kieselsäuren an, um diese zu schützen.

Dabei hat es sich als sehr vorteilhaft erwiesen, wenn als Silane Alkoxysilane, vorzugsweise Trialkoxysilane vorgesehen wird.

Trialkoxysilane weisen für die Zusammensetzung sehr gute Eigenschaften auf.

Ebenfalls sehr vorteilhaft ist es, wenn als Fluorkomponente ein Fluorpolymer vorgesehen ist.

Fluorpolymere weisen sehr gute abweisende Eigenschaften besonders gegen unpolare Flüssigkeiten auf.

Ebenfalls sehr vorteilhaft ist es, wenn die Zusammensetzung durch Zusammenwirken der Bestandteile auch Eigenschaften aufweist, die zu einer Veränderung der Lichtbrechung an der Oberfläche, vorzugsweise zu einer Strukturhervorhebung des behandelten Materials führen.

Durch die damit verbundene Farbtonvertiefung wird eine Hervorhebung der natürlichen Strukturen, Muster und Farben der behandelten Oberfläche erzielt. Diese Wirkung kann neben dem Zusammenwirken der Silan-, Siloxan- und FluorKomponenten auch durch die Füllstoffe erzeugt werden.

Eine sehr vorteilhafte Verwendung der erfindungsgemäßen Zusammensetzung liegt dann vor, wenn die Zusammensetzung zur Verringerung der Saugfähigkeit, der Oberflächenspannung und/oder der Anhaftung von Farbe bezüglich des behandelten Materials eingesetzt wird.

Hierdurch wird nicht nur verhindert, daß polare und unpolare Flüssigkeiten einzudringen vermögen und Rückstände und/oder Verfärbungen hinterlassen können, sondern es wird auch erreicht, daß unerwünschter Farbauftrag leicht wieder entfernt werden kann.

Dabei hat es sich als sehr vorteilhaft erwiesen, wenn die Zusammensetzung als Grundierung und/oder als Endbehandlung eingesetzt wird.

Mit einer einzigen Behandlung der Untergründe werden mehrere Ziele erreicht. Es wird dabei auch verhindert, daß wie bei bekannten Zusammensetzungen oftmals die unterschiedlichen Zusammensetzungen für die einzelnen Ziele sich nicht miteinander vertragen und so auch nicht das gewünschte Ergebnis erzielt werden konnte. Die Haftung zu einer folgenden Beschichtung kann damit kontrolliert werden. Es ist auch denkbar, daß dadurch die Entfernung von Schleiern, die beim Verfugen von Fliesen oder dergleichen entstehen, leichter entfernt werden können. Die Zusammensetzung ist aber auch als nicht abwaschbare und nicht verschleißende Endbehandlung einsetzbar.

Im folgenden ist die Erfindung anhand eines Ausführungsbeispiels veranschaulicht.

Eine erfindungsgemäße Zusammensetzung zum Steuern des Eindringverhaltens von polaren und unpolaren Flüssigkeiten in mineralische Baustoffe, wie Beton, Natur- und Kunststeine, Fliesen, Putze und auch zum Erzeugen eines hervorragenden und natürlichen Erscheinungsbildes besteht aus Fluor- und Silan/Siloxan-Komponenten, die durch ein Zusammenwirken nicht nur die flüssigkeitsabweisenden Eigenschaften erzeugen, sondern auch das Erscheinungsbild insbesondere durch eine Strukturhervorhebung verbessern. Die Silane weisen reaktive Gruppen auf, die mit den behandelten Oberflächen Bindungen ebenso eingehen können wie mit den weiteren Komponenten der Zusammensetzung.

Besonders bei Natursteinen ist es erwünscht, daß die natürliche Struktur sichtbar ist. Durch eine Strukturhervorhebung werden auch geringe Nuancen in den Farben und damit in der Struktur sichtbar und wie erwünscht hervorgehoben.

Es war zwar bislang schon bekannt, eine solche Strukturhervorhebung durch entsprechende Substanzen zu erzeugen. Allerdings war es bislang nicht möglich, diese Farbtonvertiefung in Zusammenhang mit einer Flüssigkeitsabstoßung sicher und reproduzierbar auf vielen Untergründen zu erzeugen.

Das Zusammenwirken der Komponenten der erfindungsgemäßen Zusammensetzung ermöglicht es nunmehr, alle drei Eigenschaften mit einem einzigen Auftrag eines Imprägnierungsmittels gleichmäßig und reproduzierbar zu erzeugen.

Die Fluor- und Silan/Siloxan-Komponenten werden mit einem Lösungsmittel so weit verdünnt, daß diese gleichmäßig aufbringbar sind.

Die Fluorkomponente kann schon zu Beginn der Herstellung der Zusammensetzung in Butylacetat oder Naphta gelöst sein. Bei der Silankomponente hat es sich als sehr gut erwiesen, wenn ein Trialkoxysilan eingesetzt wird.

Die Silan/Siloxan-Komponente ist in einem organischen Lösungsmittel gelöst.

Die beiden gelösten Komponenten werden miteinander vermischt. Zusätzlich wird weiteres organisches Lösungsmittel zugegeben, so daß die erwünschte dünnflüssige Konsistenz erzielt wird.

Es ist aber auch denkbar, daß die Fluor- und Silikonkomponenten trocken oder in pastöser Form miteinander vermengt werden und erst anschließend in Lösungsmittel gelöst werden.

In beiden Fällen wird durch das Lösen in Lösungsmittel eine gute Benetzbarkeit und ein gutes Eindringen in die zu behandelnde Oberfläche sichergestellt.

Die fertige Zusammensetzung ist streich- und rollbar. Es ist auch denkbar, daß zu behandelnde Oberflächen geflutet, gespritzt oder anderweitig behandelt wird. Die Oberflächen können beispielsweise mit einem Lappen eingerieben oder mit einem getränkten Wischmopp abgewischt werden.

Die Zusammensetzung dringt, sofern die Oberfläche saugfähig ist, in diese ein und vermindert so die Saugfähigkeit zusätzlich Abweisung von polaren und unpolaren Flüssigkeiten und darin gelöster bzw. dispergierter Substanzen.

Bei sorgfältiger Auswahl der eingesetzten Komponenten werden die Poren der Oberfläche nicht verschlossen, so daß eine Atmungsfähigkeit erhalten bleibt.

Zusätzlich setzt sich eine Schicht auf der Oberfläche ab, die sich mit der Oberfläche verbindet und fest auf ihr haftet. Diese Schicht ist hauptsächlich für die Abweisung von Flüssigkeiten verantwortlich und sorgt auch für eine Glättung der Oberfläche und somit zu einer Strukturhervorhebung.

Zur Strukturhervorhebung und zur Glättung der Oberfläche können auch Partikel vorgesehen werden, die dann vorhandene Poren auskleiden und/oder teilweise oder ganz verfüllen. Hierzu können keramische Materialien, Metalloxyde bzw. Halbmetalloxyde, insbesondere SiO₂, ZrO₂, TiO₂ und/oder Al₂O₃, Silikonharze, feste Fluorpolymere, Polymerpartikel, Glaspartikel, Kieselgele und Kieselsäuren oder andere mineralische Partikel vorgesehen werden. Die Partikel sollen sehr fein sein. Hygroskopische Partikel, die beispielsweise aus Kieselsäuren bestehen, können modifiziert oder beschichtet sein. Als Beschichtung wurden erfolgreich Alkylsilane und Siloxane eingesetzt.

Die zugesetzten Lösungsmittel lüften beim Trocknen der Zusammensetzung ab.

Durch die Offenporigkeit bleiben Anti-Rutscheigenschaften der behandelten Oberfläche erhalten. Es ist also nicht zu erwarten, daß die behandelte Oberfläche glitschig oder schlüpfrig wird, was gerade im Bodenbereich äußerst wichtig ist.

Die Zusammensetzung kontrolliert aber auch die Haftfähigkeit zu weiteren Beschichtungen, die nachträglich aufgebracht werden sollen. Gegenüber handelsüblichen Farben und Lacken wird die Haftfähigkeit herabgesetzt.

Einerseits durch die flüssigkeitsabweisenden Eigenschaften und andererseits die herabgesetzte Haftfähigkeit sind unerwünschte Farbaufträge leicht entfernbar. So lassen sich beispielsweise Bemalungen oder auch Klebstoffe von Plakaten oder auch Reste von Fugenfüllern oder dergleichen leicht wieder ablösen ohne die Oberfläche zu beschädigen.

Die Oberflächenbehandlung ist nicht nur als Grundierung, sondern auch als Endbehandlung einsetzbar. Die Zusammensetzung weist eine hervorragende Langzeitbeständigkeit auf und ist nicht abwaschbar.

Bei Versuchen konnte auch kein Verschleiß der Oberflächenbehandlung beobachtet werden.

Es wurde herausgefunden, daß 10 bis 30 gew.% Silan/Siloxan-Komponente und 0,1 bis 5 gew.% Fluorkomponente hervorragende Resulate bezüglich der abstoßenden Wirkung gegenüber polaren und unpolaren Flüssigkeiten und auch bezüglich der Strukturhervorhebung liefern. Der Rest ist mit Lösungsmittel aufgefüllt.

Bei Versuchen wurden hierzu handelsübliche Komponenten eingesetzt.

Als Lösungsmittel wurde Naphta eingesetzt.

Als Silan/Siloxan-Komponente wurde ein mit organischen Lösungsmitteln verdünnbares, lösungsmittelfreies Silikonkonzentrat auf Silan-/Siloxanbasis herangezogen, welches zur Erzeugung von abstoßenden Eigenschaften gegenüber polaren Flüssigkeiten eingesetzt wird.

Als Fluorkomponente wurde eine in Lösungsmittel gelöste Fluorzusammensetzung verwandt, die zur Imprägnierung von Stein, Keramik und Beton Oberflächen zur Erzeugung von abstoßenden Eigenschaften gegenüber polaren und unpolaren Flüssigkeiten geeignet ist.

Wird auf eine Strukturhervorhebung kein Wert gelegt, so hat es sich gezeigt, daß eine Zusammensetzung aus 1 bis 10 gew.% Silan/Siloxan-Komponente, 1 bis 5 gew.% Fluorkomponente und ein entsprechender Anteil Lösungsmittel hervorragende Resulate bezüglich Flüssigkeitsabweisung liefern, jedoch keine Strukturhervorhebung auftritt.

Andere Zusammensetzungen sind denkbar und können je nach zu behandelndem Material oder erwünschten Eigenschaften modifiziert werden.

Durch die erfindungsgemäße Zusammensetzung wird ein regelrechter Abperleffekt erzeugt, aber auch die Oberflächenspannung herabgesetzt, so daß Flüssigkeiten ablaufen können. Dies geschieht durch die Veränderung des Kontaktwinkels gegenüber polaren und unpolaren Flüssigkeiten.

Die Strukturhervorhebung wird über die Veränderung des optischen Brechungswinkels an der Oberfläche erzielt.

## Patentansprüche

1. Dünnflüssige Zusammensetzung im Baukastensystem zum Steuern des Eindringverhaltens von polaren und unpolaren Flüssigkeiten in mineralischen Baustoffe, wie Beton, Natur- und Kunststeine, Fliesen, Putze, bestehend aus einer Fluorkomponenten, Silan/Siloxan und Lösungsmittel und eventuell Füllstoffen, **dadurch gekennzeichnet, daß** 0,5 bis 5% Fluorkomponenten und 10 bis 30% Silan/Siloxan und als Lösungsmittel ein aliphatisches Lösungsmittel und/oder ein Kohlenwasserstoff vorgesehen ist, oder 1 bis 5% Fluorkomponenten und 1 bis 10% Silan/Siloxan und als Lösungsmittel ein aliphatisches Lösungsmittel und/oder ein Kohlenwasserstoff vorgesehen ist.

2. Zusammensetzung nach Anspruch 1, **dadurch gekennzeichnet, daß** die Silane, Siloxane und/oder Fluorkomponenten in Butylacetat und/oder Naphta gelöst sind.

3. Zusammensetzung nach Anspruch 1 oder 2, **dadurch gekennzeichnet, daß** Füllstoffe vorgesehen sind.

4. Zusammensetzung nach Anspruch 3, **dadurch gekennzeichnet, daß** als Füllstoffe SiO₂, ZrO₂, TiO₂, Al₂O₃, Polymerpartikel, Glaspartikel, Kieselgele, Kieselsäuren, feste Fluorpolymere, und/oder, Silikonharze vorgesehen sind, die modifiziert oder beschichtet sein können.

5. Zusammensetzung nach einem der vorangehenden Ansprüche, **dadurch gekennzeichnet, daß** als Silan Alkoxysilane, vorzugsweise Trialkoxysilane vorgesehen ist.

6. Zusammensetzung nach einem der vorangehenden Ansprüche, **dadurch gekennzeichnet, daß** als Fluorkomponente ein Fluorpolymer vorgesehen ist.

7. Verwendung einer Zusammensetzung nach einem der vorangehenden Ansprüche, **dadurch gekennzeichnet, daß** die Zusammensetzung zur Verringerung der Saugfähigkeit, der Oberflächenspannung und/oder der Anhaftung von Farbe bezüglich des behandelten Materials eingesetzt wird.

8. Verwendung nach Anspruch 7, **dadurch gekennzeichnet, daß** die Zusammensetzung als Grundierung und/oder als Endbehandlung eingesetzt wird.

9. Verwendung nach Anspruch 7 oder 8, **dadurch gekennzeichnet, daß** die Zusammensetzung als nicht abwaschbare und nichtverschleißende Endbehandlung eingesetzt wird.

10. Verwendung nach Anspruch 7, 8 oder 9, **dadurch gekennzeichnet, daß** die Zusammensetzung durch Zusammenwirken der Bestandteile eine Veränderung der Lichtbrechung an der Oberfläche, vorzugsweise eine Strukturhervorhebung des behandelten Materials herbei führt.

## Claims

1. Low-viscosity composition in a modular system for controlling penetration behaviour of polar and non-polar liquids into mineral materials, such as concrete, natural and synthetic stones, tiles, plaster, consisting of a fluoro-component, silane/siloxane and solvent and possible fillers, **characterised in that** 0.5 to 5% fluoro-component and 10 to 30% silane/siloxane and, as solvent, an aliphatic solvent and/or a hydrocarbon are provided or 1 to 5% fluoro-component and 1 to 10% silane/siloxane and, as solvent, an aliphatic solvent and/or a hydrocarbon are provided.

2. Composition according to claim 1, **characterised in that** the silanes, siloxanes and/or fluoro-components are dissolved in butylacetate and/or naphtha.

3. Composition according to claim 1 or 2, **characterised in that** fillers are provided.

4. Composition according to claim 3, **characterised in that** SiO₂, ZrO₂, TiO₂, Al₂O₃, polymer particles, glass particles, siliceous gels, silicon gels, solid fluoro-polymers and/or silicon resins, which can be modified or coated, are provided as fillers.

5. Composition according to any one of the preceding claims, **characterised in that** alkoxysilanes, preferably trialkoxysilanes, are provided as silane.

6. Composition according to any one of the preceding claims, **characterised in that** a fluoro-polymer is provided as fluoro-component.

7. Use of a compositition according to any one of the preceding claims, **characterised in that** the composition is used for reducing absorbency, surface tension and/or adhesion of paint relative to the treated material.

8. Use according to claim 7, **characterised in that** the composition is used as a base or as a final treatment.

9. Use according to claim 7 or 8, **characterised in that** the composition is used as a final treatment which cannot be washed off or worn off.

10. Use according to claims 7, 8 or 9, **characterised in that** the composition through cooperation of the components produces a change in the light refraction at the surface, preferably a structural emphasis of the treated material.

## Revendications

1. Composition fluide sous forme de système modulaire pour commander la pénétration de liquides polaires et non polaires dans des matériaux de construction minéraux, comme le béton, les pierres naturelles et artificielles, les carreaux ou dalles, les enduits, constituée d'un composant fluoré, de silane/siloxane, d'un solvant et éventuellement de matières de charge, **caractérisée en ce qu'**il est prévu 0,5 à 5 % de composant fluoré et 10 à 30 % de silane/siloxane et comme solvant un solvant aliphatique et/ou un hydrocarbure, ou qu'il est prévu 1 à 5 % de composant fluoré et 1 à 10 % de silane/siloxane et comme solvant un solvant aliphatique et/ou un hydrocarbure.

2. Composition selon la revendication 1, **caractérisée en ce que** les silanes, les siloxanes et/ou les composants fluorés sont dissous dans l'acétate de butyle et/ou du naphta.

3. Composition selon la revendication 1 ou 2, **caractérisée en ce que** des matières de charge sont prévues.

4. Composition selon la revendication 3, **caractérisée en ce que** SiO₂, ZrO₂, TiO₂, Al₂O₃, des particules de polymères, des particules de verre, des gels de silice, des acides siliciques, des polymères fluorés solides et/ou des résines silicones, qui peuvent être modifiés ou revêtus, sont prévus comme matières de charge.

5. Composition selon l'une des revendications précédentes, **caractérisée en ce que** des alkoxysilanes, de préférence des trialkoxysilanes, sont prévus comme silane.

6. Composition selon l'une des revendications précédentes, **caractérisée en ce qu'**un polymère fluoré est prévu comme composant fluoré.

7. Utilisation d'une composition selon l'une des revendications précédentes, **caractérisée en ce que** la composition est utilisée pour diminuer la capacité d'absorption, la tension superficielle et/ou l'adhérence d'une peinture concernant le matériau traité.

8. Utilisation selon la revendication 7, **caractérisée en ce que** la composition est utilisée comme apprêt et/ou comme traitement de finition.

9. Utilisation selon la revendication 7 ou 8, **caractérisée en ce que** la composition est utilisée comme traitement de finition non lavable et inusable.

10. Utilisation selon la revendication 7, 8 ou 9 **caractérisée en ce que** la composition provoque, par coopération des composants, une modification de la réfraction de la lumière à la surface, de préférence une mise en évidence ou en avant de la structure du matériau traité.
